# EUROPÄISCHE PATENTSCHRIFT

(11) **EP 2 588 269 B1**
(45) Veröffentlichungstag und Bekanntmachung des Hinweises auf die Patenterteilung: **25.02.2015**
(21) Anmeldenummer: 11730224.0
(22) Anmeldetag: 04.07.2011
(51) Int. Cl.: B23K 26/38, B26D 7/10, B26F 1/28, B26F 1/31

(54) **VERFAHREN UND VORRICHTUNGEN ZUR ERZEUGEN EINER VIELZAHL VON LÖCHERN IN WERKSTÜCKEN ; GLAS-INTERPOSER MIT LÖCHERN**
METHOD OF AND DEVICES FOR CREATING A MULTIPLICITY OF HOLES IN WORKPIECES : GLAS-INTERPOSER WITH HOLES
PROCÉDÉ ET DISPOSITIFS POUR MÉNAGER UNE PLURALITÉ DE TROUS DANS DES PIÈCES ; INTERPOSEUR EN VERRE AVEC DES TROUS

(30) Priorität: 02.07.2010 DE 102010025967
(43) Veröffentlichungstag der Anmeldung: 08.05.2013
(73) Patentinhaber: Schott AG, 55122 Mainz (DE)
(72) Erfinder: NATTERMANN, Kurt, 55437 Ockenheim (DE); PEUCHERT, Ulrich, 55294 Bodenheim (DE); MÖHL, Wolfgang, 67574 Osthofen (DE); BEHLE, Stephan, 55239 Gau-Odernheim (DE)
(74) Vertreter: Blumbach Zinngrebe
(86) Internationale Anmeldenummer: PCT/EP2011/003301
(87) Internationale Veröffentlichungsnummer: WO 2012/000686

(56) Entgegenhaltungen:
- WO-A1-2010/087483
- WO-A2-2005/097439
- JP-A- 7 241 731
- JP-A- 2003 311 459
- JP-A- 2006 239 718
- US-A- 5 367 143
- US-A1- 2006 094 584
- US-A1- 2009 033 337

## Beschreibung

Die Erfindung bezieht sich auf Verfahren zur Erzeugung einer Vielzahl von Löchern in Werkstücken in Form von dünnen Platten und Substraten aus Glas und glasähnlichen Materialien sowie aus Halbleitern, ferner auf Vorrichtungen zur Durchführung der Verfahren und auf ein mit dem Verfahren hergestelltes Erzeugnis, siehe der Oberbegriff des Ansprüche 1, 14, 17 und 20.

### Hintergrund der Erfindung

Das Perforieren von Kunststofffilmen durch elektrisch erzeugte Funken ist durch US 4,777,338 bekannt. Es ist eine Vielzahl von Elektroden-Gegenelektroden-Paaren vorgesehen, zwischen denen der Kunststofffilm geführt wird und über die Hochspannungsenergie entladen wird. Der Film wird dabei durch ein Wasserbad geführt, und die Temperatur des Wasserbades dient dazu, die Abmessung der Perforationen zu beeinflussen.

Ein weiteres Verfahren zur Erzeugung von Poren in Kunststofffilmen ist durch US 6,348,675 B1 bekannt. Es werden Impulsfolgen zwischen Elektrodenpaaren unter Zwischenlage des Kunststofffilms erzeugt, wobei der erste Impuls zur Aufheizung des Kunststofffilms an der Lochungsstelle und die weiteren Impulse zur Bildung der Lochung und deren Formung dienen.

Aus US 4,390,774 ist die Bearbeitung auf elektrischem Wege von nicht leitfähigen Werkstücken im Sinne von Schneiden des Werkstücks oder Schweißen des Werkstücks bekannt. Ein Laserstrahl wird auf das Werkstück gerichtet, das während der Einwirkung verschoben wird, und es wird mittels zweier Elektroden Hochspannung an die erhitzte Zone angelegt, um Funkenüberschlag zu bilden, der zur Bearbeitung des Werkstücks dient. Beim Schneiden des Werkstücks brennt dieses in einer kontrollierten Weise, oder die elektrische Leitfähigkeit nimmt mit der Temperatur zu, wie beim Schneiden von Glas. Wenn Werkstücke geschweißt werden sollen, werden noch reaktive oder inerte Gasströme auf die erhitzte Zone gerichtet, die entweder mit dem Werkstück oder der Elektrode oder einem Flussmittel reagieren. Auf diese Weise kann Glas, Papier, Tuch, Karton, Leder, Kunststoff, Keramik und Halbleiter geschnitten oder es kann Glas und Kunststoff geschweißt, Gummi vulkanisiert und Kunstharz thermisch ausgehärtet werden. Die Gerätschaft ist aber ihrer Art nach zu klobig, als dass feine Löcher in das Werkstück appliziert werden könnten.

Aus WO 2005/097439 A2, auf der Oberbegriff des Ansprüche 1, 14 und 17 basiert, ist ein Verfahren zur Bildung einer Struktur, vorzugsweise eines Loches, eines Hohlraums oder eines Kanals in einer Region eines elektrisch isolierenden Substrats bekannt, bei dem Energie vorzugsweise in Form von Wärme, auch durch einen Laserstrahl, dem Substrat oder der Region zugeführt und eine Spannung an die Region angelegt wird, um dort einen dielektrischen Durchbruch zu erzeugen. Mit einem Rückkopplungsmechanismus wird der Vorgang geregelt. Es können feine, einzelne Löcher nacheinander erzeugt werden, jedoch kann nicht mit mehreren Elektrodenpaaren gleichzeitig gearbeitet werden. Dies deshalb, weil sich parallele Hochspannungselektroden gegenseitig beeinflussen und ein einzelner Durchbruch den gesamten Strom an sich zieht.

Durch WO 2009/059786 A1 ist ein Verfahren zur Bildung einer Struktur, insbesondere eines Loches, eines Hohlraums, eines Kanals oder einer Aussparung in einer Region eines elektrisch isolierenden Substrats bekannt, bei der geladene elektrische Energie durch die Region entladen wird und zusätzliche Energie, vorzugsweise Wärme, dem Substrat oder der Region zugeführt wird, um die elektrische Leitfähigkeit des Substrats oder der Region zu vergrößern und dabei einen Stromfluss auszulösen, dessen Energie sich in dem Substrat in Wärme umwandelt, wobei die Rate der Wärmeumwandlung der elektrischen Energie durch ein Strom und Leistung modulierendes Element gesteuert wird. Eine Vorrichtung zur Erzeugung mehrerer Löcher gleichzeitig wird nicht offenbart.

Aus WO 2009/074338 A1 geht ein Verfahren zur Einführung einer Änderung der dielektrischen und/oder optischen Eigenschaften in einer ersten Region eines elektrisch isolierenden oder elektrisch halbleitenden Substrats hervor, wobei auf das Substrat, dessen optische oder dielektrische Eigenschaften infolge zeitweiliger Zunahme der Substrattemperatur irreversibel verändert sind, gegebenenfalls eine elektrisch leitende oder halbleitende oder isolierende Schicht aufweist, wobei elektrische Energie durch eine Spannungszufuhr der ersten Region zugeführt wird, um diese signifikant aufzuheizen oder teilweise oder ganz zu schmelzen, ohne dass Material aus der ersten Region ausgeworfen wird, wobei ferner optional zusätzliche Energie zugeführt wird, um örtliche Wärme zu erzeugen und die Stelle der ersten Region zu definieren. Die Wärmeumwandlung der elektrischen Energie manifestiert sich in Form eines Stromflusses innerhalb des Substrats. Die Abgabe der elektrischen Energie wird durch ein Strom und Leistung modulierendes Element geregelt. Nach dem Verfahren erzeugte Änderungen in Substratoberflächen umfassen auch Löcher, die in Borsilikatglas oder Siliziumsubstraten erzeugt worden sind, die mit einer isolierenden Schicht aus Paraffin oder einem Heizschmelzkleber versehen worden waren. Es werden auch Löcher in Silizium, in Zirkon, in Saphir, in Indiumphosphid oder in Galliumarsenid erzeugt. Teilweise wurde der Entladungsprozess durch eine Laserbestrahlung bei einer Wellenlänge von 10,6 µm (CO₂-Laser) initiiert. Es werden auch Lochraster gezeigt, jedoch mit relativ weiten Lochabständen. Eine Vorrichtung zur Erzeugung mehrerer Löcher gleichzeitig wird nicht offenbart.

Aus JP 2006 239 718 A ist bekannt, wie filamentartige Kanäle innerhalb von transparenten Materialen zu erzeugen und die Filamente bis zum Boden des transparenten Materials reichen zu lassen. Dadurch können feine Strukturen wirksam und genau auf dem transparenten Material, beispielsweise Glas, erzeugt werden.

Die DE 37 42 770 A1 beschreibt Flachmembranen aus Folien von organischen Polymeren, Glas oder keramischen Werkstoffen mit trichterförmig sich verjüngenden Poren definierter Porengröße, die durch Laserlicht erzeugt werden, indem eine Lochmaske auf das Werkstück abgebildet wird. Jedem Laserstrahl sind somit eine Vielzahl von Poren in dem Werkstück zugeordnet.

Aus der JP 2003-311459 A sind eine Mehrzahl von Faserlaseroszillatoren bekannt, die durch einen Laserstrahl zu Schwingungen angeregt werden, um Löcher in ein zu bearbeitendes Werkstück mechanisch zu bohren.

Aus JP 7241731 A ist das Bohren von Durchgangslöchern in Platten für unterschiedliche Lochdurchmesser bekannt, wobei bei größerem Lochdurchmesser der Abstand von Elektroden und deren Spannung erhöht, während bei kleineren Löchern der Abstand und die Spannung erniedrigt werden.

Die US 5,367,143 A zeigt die Herstellung einer Mehrzahl von Löchern mittels eines Multi-Strahles, deren einzelne Strahlen nachfolgend über jede Lochungsstelle auf dem Substrat geführt werden.

Ein Interposer gemäß dem Oberbegriff des Anspruchs 20 ist aus US 2009/0033337 A1 bekannt und kann eine laminierte oder solide Struktur aufweisen und aus Aluminiumoxid oder Glaskeramik bestehen. Der Interposer enthält eine Mehrzahl von leitenden Vias, deren Herstellung nicht offenbart ist.

Die US 2006/0094584 A1 bezieht sich auf ein zur Laserbearbeitung geeignetes Glas. Ob sich das Glas für die Herstellung eines Interposers eignen würde, kann aus der Schrift nicht entnommen werden.

Aus dem Stand der Technik geht somit hervor, wie man Folien und dünne Platten aus dielektrischen Materialien mittels eines elektrischen Hochspannungsfeldes geeigneter Frequenz oder in Impulsform perforieren kann. Durch lokale Aufheizung des Materials wird an den zu perforierenden Stellen die Durchschlagsfestigkeit herabgesetzt, so dass die angelegte Feldstärke ausreicht, einen elektrischen Strom durch das Material fließen zu lassen. Falls das Material eine ausreichend starke Zunahme der elektrischen Leitfähigkeit von der Temperatur aufweist, wie dies bei Gläsern, Glaskeramiken und Halbleitern (auch vielen Kunststoffen) zutrifft, entsteht in dem Material eine "elektrothermische Selbstfokussierung" des Durchschlagskanals. Das Lochmaterial wird immer heißer, die Stromdichte nimmt zu, bis das Material verdampft und die Perforation "freibläst". Da die Perforation auf einem dielektrischen Durchbruch beruht, ist es jedoch schwierig, die gewünschte Stelle des Durchschlags genau einzuhalten. Bekanntlich nehmen Blitze einen sehr unregelmäßigen Verlauf.

Bei CPU-Chips gibt es mehrere Hundert Kontaktpunkte auf seiner Unterseite auf kleiner Fläche verteilt. Um Zuleitungen zu den Kontaktpunkten zu schaffen, werden dünne (< 1 mm) Plättchen, mit Epoximaterial ummantelte Glasfasermatten, sogenannte "Interposer", benutzt, durch die die Zuleitungen führen. Hierzu werden mehrere Hundert Löcher in dem Interposer angebracht und mit leitfähigem Material verfüllt. Typische Lochgrößen liegen im Bereich von 250 bis 450 µm je Loch. Zwischen CPU-Chips und Interposer sollte es keine Längenänderungen geben. Die Interposer sollten deshalb ein Wärmedehnverhalten ähnlich dem Chip-Halbleitermaterial aufweisen, was jedoch bei den bisher verwendeten Interposern nicht zutrifft.

Was im Stand der Technik weiterhin fehlt, ist die Erzeugung in industriellem Maßstab einer Vielzahl von feinen Löchern nebeneinander mit Lochabständen im Bereich von 120 µm bis 400 µm mittels des elektrothermischen Perforierungsvorgangs.

### Allgemeine Erfindungsbeschreibung

Der Erfindung liegt die Aufgabe zugrunde, ein Verfahren und eine Vorrichtung zur Erzeugung einer Vielzahl von Löchern in Werkstücken in Form von dünnen (< 1 mm) Platten und Substraten aus Glas und glasähnlichen Materialien sowie aus Halbleitern anzugeben, wenn eine oder mehrere der folgenden Forderungen erfüllt werden müssen:
- Die Löcher müssen exakt positioniert werden können (± 20 µm).
- Es müssen viele (10 bis 10.000) kleine Löcher pro Werkstück bei engen Toleranzen der Löcher zueinander erzeugt werden können.
- Die Löcher müssen in einem engen Abstand (30 µm bis 1000 µm) zueinander erzeugt werden können.
- Die Löcher müssen im industriellen Maßstab, d. h. viele Mikrolöcher pro Werkstück gleichzeitig, erzeugt werden können.

Insbesondere sollen "Glas-Interposer" hergestellt werden können, die sich wie folgt auszeichnen:
- Sie besitzen eine Lochstruktur mit Lochdurchmessern von 20 µm bis 450 µm, vorzugsweise zwischen 50 µm und 120 µm, mit Aspektverhältnissen (Glasdicke zu Lochdurchmesser-Verhältnissen) von 1 bis 10.
- Die Lochanzahl variiert zwischen 1000 und 5000.
- Der Abstand der Mittelpunkte der Löcher liegt zwischen 120 µm und 400 µm.
- Die Lochform ist nicht ideal zylindrisch, sondern an dem Lochaus- und -eintritt ist die Randkante abgerundet.
- Eine Wulst um den Lochrand mit einer Wulsthöhe von maximal 5 µm kann gegebenenfalls zugelassen werden.
- Die Lochwände sind glatt (feuerpoliert).

Bei dem erfindungsgemäßen Verfahren gemäß Anspruch 1 wird in zwei Etappen vorgegangen. Zunächst wird das Loch im zu lochenden Werkstück "vorgearbeitet", indem Laserstrahlen auf die vorbestimmten Lochungsstellen gerichtet werden, um in dem Substrat athermische Zerstörung entlang jeweils eines filamentartigen Kanals herbeizuführen. Wegen der Transparenz des Materials dringt der Laserstrahl in das Material ein, und wenn die Strahlungsintensität sehr hoch ist, wird das Material örtlich durch die hohe Laserfeldstärke athermisch zerstört. Dieser Effekt verstärkt sich durch optische Selbstfokussierung in transparentem Material. Deshalb wird ein gerader, äußerst dünner Schädigungskanal erzeugt. Dies erlaubt es, die Löcher exakt zu positionieren. Da sich die Schädigung entlang eines sehr dünnen Kanals erstreckt, ist es möglich, solche filamentartigen Kanäle in engem Abstand zueinander herzustellen, ohne dass sich die Herstellungsvorgänge gegenseitig stören.

In einer zweiten Etappe werden die filamentartigen Kanäle auf gewünschten Lochdurchmesser gebracht. Dabei kann man sich im Prinzip auf bekannte Verfahrensweisen stützen, es ist aber auch möglich, innovative Verfahrensweisen anzuwenden, um zur Aufweitung der filamentartigen Kanäle auf gewünschten Lochdurchmesser zu gelangen.

Gemäß weiterer Erfindung werden, ausgehend von der Oberfläche des Platten- oder Substratmaterials, an den vorbestimmten Lochungsstellen örtlich begrenzte Leitungsbereiche erzeugt, die als Mikroelektrode für einen Hochspannungsdurchschlag oder als Mikroantennen für zugeführte Hochfrequenzenergie ausgenutzt werden, um zu elektrothermischen Durchbrüchen und damit zur Bildung der gewünschten Löcher zu gelangen. Die örtlich begrenzten Leitungsbereiche können durch Erzeugung von Ionisation und Bildung von Plasma erzeugt werden.

Man kann die Leitungsbereiche auch durch örtlich aufgedrucktes Material bilden, das von sich aus leitfähig ist oder durch Energieeintrag leitfähig wird.

Die Leitungsbereiche können auch durch Wärmeleitung wirksam gemacht werden, und in einem solchen Fall kann Strahlung absorbierende Farbe an den vorbestimmten Lochungsstellen aufgedruckt werden.

Die Erfindung betrifft auch Vorrichtungen zur Durchführung des Lochungsverfahrens gemäß Ansprüche 14 und 17. Es ist eine Vielfachanordnung von Lasern zur Abgabe von jeweiligen Laserstrahlen gemäß einem vorbestimmten Raster vorgesehen. Ein Werkstückhalter hält das zu lochende Platten- oder Substratmaterial quer zur Richtung der Laserstrahlen und ermöglicht die Querverschiebung und Fixierung des Werkstücks in Relation zu der Vielfachanordnung der Laser. Die Laser sind in Wellenlängenbereichen zwischen 3000 und 200 nm wirksam, in welchen das Platten- oder Substratmaterial wenigstens teilweise so transparent ist, dass der jeweilige Laserstrahl in das Material eindringt. Es werden gepulste Laser verwendet, die eine erhebliche Strahlungsintensität erreichen, so dass das Material lokal athermisch zerstört wird. In dem Material eingebrachte Absorber/Streuzentren unterstützen diese Wirkung der örtlich eng begrenzten Zerstörung.

Nach Herstellung der filamentartigen Kanäle können diese in zweierlei Weise, die auch miteinander kombinierbar sind, auf den gewünschten Lochdurchmesser gebracht werden:
1. durch Hochfrequenzenergie mit Erhitzen und Schmelzen/Verdampfen des Materials entlang der filamentartigen Kanäle, gegebenenfalls unterstützt in Kombination mit chemischer Einwirkung entlang der sich bildenden Lochwandungen,
2. durch Hochspannung erzeugten elektrothermischen Durchbruch entlang der filamentartigen Kanäle, gegebenenfalls mit chemisch/physikalischem Entfernen des ausgeräumten Materials.

Um die filamentartigen Kanäle zu gewünschten gleichmäßigen Löchern aufzuweiten, können Hochspannungselektroden eingesetzt werden, die sich gegenüberstehend nahe der filamentartigen Kanäle angeordnet sind. Dort ist die Durchschlagsfeldstärke des Materials herabgesetzt, so dass infolge angelegter Hochspannung ein elektrischer Strom fließt, der zur Aufheizung des Materials entlang der filamentartigen Kanäle führt, wodurch wiederum die elektrische Leitfähigkeit des in Betracht gezogenen Materials örtlich zunimmt mit der Folge des noch stärkeren Stromflusses und der Aufheizung im Bereich der filamentartigen Kanäle. Dies führt schließlich zur Verdampfung von Lochmaterial und der Bildung der gewünschten Löcher in dem Werkstück. Um die Güte der Löcher oder Perforationen in dem Werkstück hinsichtlich Rundheit und Gleichmäßigkeit zu steigern, werden Hochspannungselektroden, die symmetrisch um jede Lochung des Elektrodenhalters angeordnet sind, umlaufend und in einem abwechselnden Muster zu den Gegenelektroden eingeschaltet. Dadurch verlangsamt sich die Abnutzung der Elektroden und vergleichmäßigt sich, so dass auf längere Zeit gleichmäßig ausgebildete Löcher in den Platten oder Substratmaterialien erwartet werden können.

Statt der Anwendung von Hochspannungsfunken zum Ausräumen der Löcher kann auch Hochfrequenzenergie zum örtlichen Aufheizen des Materials bei den filamentartigen Kanälen benutzt werden. Die Laserstrahlen können nämlich an den vorbestimmten Lochungsstellen für die Bildung von Plasma sorgen, die als Mikroantennen für zugeführte Hochfrequenzenergie ausgenutzt werden können. Indem die Elektrode und die Gegenelektrode plattenartig ausgebildet werden, kann man durch deren Erregung mit Hochfrequenz alle dem Raster der Lasterstrahlen zugeordnete Lochungsstellen des Platten- oder Substratmaterials gleichzeitig und ohne gegenseitige Störung elektrothermische Energie zuführen, um zu erhöhtem Stromfluss und Erwärmung des Lochmaterials mit Verdampfung und schließlich zu der gewünschten Lochbildung im Werkstück zu gelangen.

Die Herstellung der filamentartigen Kanäle und deren Aufweitung kann in unterschiedlichen Vorrichtungsteilen erfolgen, es ist aber auch möglich, kombinierte Anlagen zu benutzen.

Eine kombinierte Anlage kann umfassen:
eine Vielfachanordnung von Lasern zur Abgabe von jeweiligen Laserstrahlen gemäß einem vorbestimmten Raster;
eine plattenartige Hochfrequenzelektrode mit Lochungen gemäß dem Raster;
eine plattenartige Gegen-Hochfrequenzelektrode mit Lochungen gemäß dem Raster;
ein Werkstückhalter zum Verschieben und Fixieren des zu lochenden Platten- oder Substratmaterials im Bearbeitungsraum zwischen den Hochfrequenzelektroden;
Zu- und Abführkanäle, um reaktive Gase und Spülgase den sich bildenden Löchern in dem Material zuzuführen sowie Reaktionsprodukte abzuführen.

Eine andere kombinierte Anlage kann ebenfalls eine Vielfachanordnung von Lasern aufweisen, die zur Abgabe von Laserstrahlen nach vorbestimmtem Raster aufgestellt sind.

Ein plattenartiger Elektrodenhalter weist Lochungen mit dem vorbestimmten Raster auf, das den vorbestimmten Lochungsstellen des Platten- oder Substratmaterials angepasst ist. Symmetrisch um jede Lochung des Elektrodenhalters sind Hochspannungselektroden angeordnet. Im Abstand zum Elektrodenhalter und zur Bildung eines Zwischenraums ist ein Gegenelektrodenhalter angeordnet, der an gegenüber liegenden Stellen zu den Elektroden Gegenelektroden aufweist. Ein Werkstückhalter hält das zu lochende Platten- oder Substratmaterial im Zwischenraum von Elektrode und Gegenelektrode. Die Laser sind zu bestimmten Zeitpunkten zur Abgabe von Laserstrahlen einschaltbar, um filamentartige Kanäle gemäß des vorbestimmten Rasters in dem Platten- oder Substratmaterial zu erzeugen. Die Elektroden und Gegenelektroden sind zu späteren Zeitpunkten zur Abgabe von Hochspannungsüberschlägen einschaltbar, um die Löcher in dem Platten- oder Substratmaterial zu erzeugen.

In beiden prinzipiellen Verfahrensweisen kann das Muster der vorbestimmten Lochungsstellen in dem Werkstück umfangreicher sein als das Raster der jeweiligen Laserstrahlen. In einem solchen Fall kann das Muster der Lochungen durch mehrfaches Verschieben des Rasters relativ zu dem Werkstück erzeugt werden. Auf diese Weise können die Löcher in engem Abstand erzeugt werden, obzwar die Laser in der Vielfachanordnung nicht so dicht gepackt sind, wie es dem Lochabstand entsprechen würde.

### Kurze Beschreibung der Zeichnung

Ausführungsbeispiele der Erfindung werden anhand der Zeichnung beschrieben. Dabei zeigt:
- Fig. 1: eine erste Ausführungsform zur Erzeugung von Mikrolöchern in dünnen Platten und Substraten aufgrund von Hochspannungsfunken und
- Fig. 2: eine Vorrichtung zur Erzeugung von Mikrolöchern aufgrund von Hochfrequenz-Energieeintrag.

### Detaillierte Beschreibung

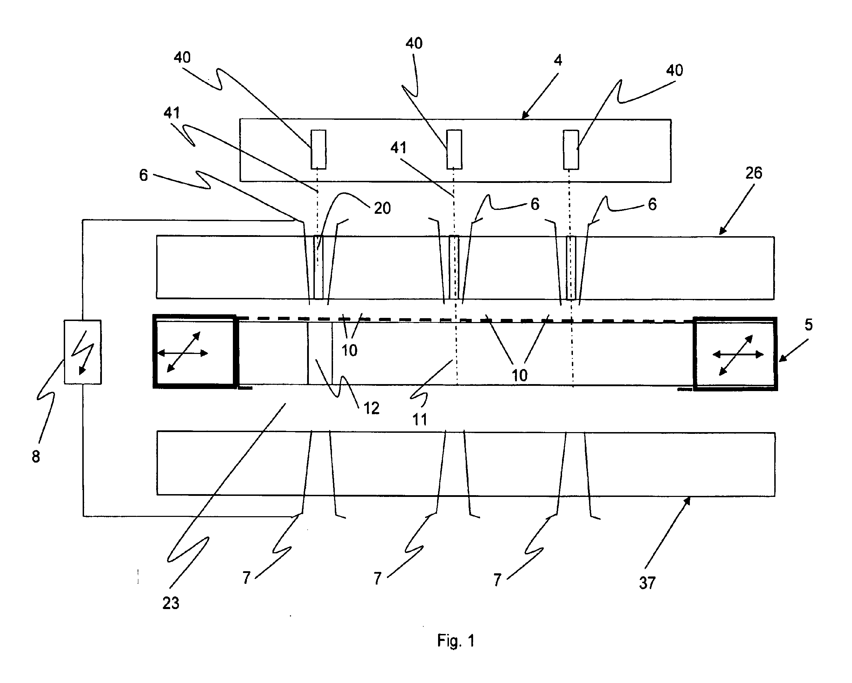

Fig. 1 zeigt schematisch eine Anlage zur Erzeugung von Mikrolöchern in einem plattenartigen Werkstück 1 aus Glas, Glaskeramik oder Halbleitermaterial. Dieses ist eingefügt in einen Bearbeitungsraum 23 zwischen einem oberen, plattenartigen Elektrodenhalter 26 und einen unteren, plattenartigen Elektrodenhalter 37. Oberhalb des Elektrodenhalters 26 ist eine Anordnung 4 von Lasern 40 vorgesehen. Das Werkstück 1 wird von einem Werkstückhalter 5 gehalten, der das Werkstück 1 innerhalb des Bearbeitungsraumes 23 zwischen den Elektrodenhaltern 26 und 37 in sehr feinen Schritten zu verstellen vermag. Der Elektrodenhalter 26 weist Lochungen 20 auf, zu denen die jeweiligen Strahlen 41 der Laser 40 fluchten. Verteilt im Kreis um die jeweiligen Lochungen 20 sind Elektroden 6 angeordnet, die über eine oder mehrere voneinander unabhängige Hochspannungsquelle 8 mit Gegenelektroden 7 verbunden sind. Das Werkstück 1 weist eine große Anzahl von gewünschten Lochungsstellen 10 auf, an denen Perforationen 12 erzeugt werden sollen. Die Lochungen 20 in dem Elektrodenhalter 26 bilden ein Raster, das zu dem Muster der Lochungsstellen 10 passt, d. h. das Muster der Lochungsstellen 10 bildet ein Vielfaches des Rasters der Lochungen 20.

Als Laser 40 werden Laser im Wellenlängenbereich zwischen 3000 und 200 nm benutzt, und zwar angepasst an das jeweilige Material des Werkstücks 1, welches wenigstens teilweise transparent ist. Der Wellenlängenbereich der Laser liegt im Transparenzbereich des Werkstückmaterials. Dadurch ist es möglich, dass die Laserstrahlung 41 in das Werkstückmaterial tief eindringt und nicht an der Oberfläche absorbiert wird. Es wird ein gepulster Laser mit kurzer Impulsdauer verwendet, dessen Strahlungsintensität im Strahlfokus so hoch ist, dass das Material durch die hohe Laserfeldstärke athermisch zerstört wird. Dieser Effekt verstärkt sich selbst durch optische Selbstfokussierung in dem transparenten Material. Dadurch werden sehr feine filamentartige Kanäle 11 von zerstörtem Material in dem Werkstück 1 erzeugt. Ein geeigneter Laser zur Erzeugung solcher filamentartiger Kanäle 11 ist der Nd:YAG-Laser mit einer Strahlungswellenlänge von 1064 nm und einer Impulsdauer im ps- bis ns-Bereich. Weitere geeignete Laser sind Yb:YAG bei 980 nm, Er:YAG bei 1055 oder bei etwa 3000 nm, Pr:YAG oder Tm:YAG bei 1300 bis 1400 nm. Teilweise ist Frequenzverdopplung oder -verdreifachung bei diesen Lasern möglich.

Die Bildung des filamentartigen Kanals 11 kann durch natürlich vorkommende oder künstlich eingebrachte Absorber oder Streuzentren in dem Werkstückmaterial 1 verbessert werden, insbesondere wenn es sich dabei um Glas handelt. Gebundenes Wasser kann als Absorber genutzt werden. Als absorbierende Elemente sind schmal absorbierende, laseraktive Elemente, wie die aktiven Seltenen Erdionen Ce, Pr, Nd, Sm, Eu, Gd, Tb, Dy, Ho, Er, Tm, Yb nutzbar. Auch breitbandig absorbierende Elemente, wie ÜbergangsmetallIonen, beispielsweise Cr, Mn, Fe sind brauchbar. Laser und absorbierende Elemente werden einander angepasst. Es werden nur außerordentlich kleine Mengen der geeigneten Absorber benötigt.

Nach Herstellung der filamentartigen Kanäle 11 werden die Perforationen oder Löcher 12 erzeugt. Im Falle der speziellen Apparatur der Fig. 1 geschieht dies durch Anlage von Hochspannung an die Elektroden 6 und 7. Diese sind jeweils symmetrisch um die Strahlrichtung 41 verteilt angeordnet und enthalten vorzugsweise jeweils drei Elektroden. Die oberen Elektroden 6 werden umlaufend eingeschaltet, während die unteren Elektroden 7 nach Zufallsmuster oder Programm ein- und ausgeschaltet werden, jedoch so, dass zu jeder Zeit während des Hochspannungsbetriebs eine der oberen und eine der unteren Elektroden eingeschaltet ist. Die Funken laufen den Weg des geringsten Widerstandes entlang der filamentartigen Kanäle 11, die eingetragene Wärme vermindert den elektrischen Widerstand, die Stromdichte nimmt zu, und die Aufheizung führt zur Verdampfung des Lochmaterials. Durch die Betriebsweise mit abwechselnd angesteuerten Einzelelektroden erreicht man, dass sich das Loch 12 senkrecht zur Plattenebene ausbildet und gute axiale Symmetrie erzielt wird. Die Wände der Löcher 12 folgen weitgehend einem Zylinder. Ferner kann eine verlängerte Lebensdauer der hoch beanspruchten Elektroden 6, 7 erwartet werden.

Das verdampfte Lochmaterial kann aus dem Bearbeitungsraum 23 abgesaugt werden, was nicht näher dargestellt ist. Man kann dabei mit reaktiven Gasen arbeiten, um den Dampf in Gasphase überzuführen und Materialniederschlag an unerwünschten Stellen weitgehend zu vermeiden.

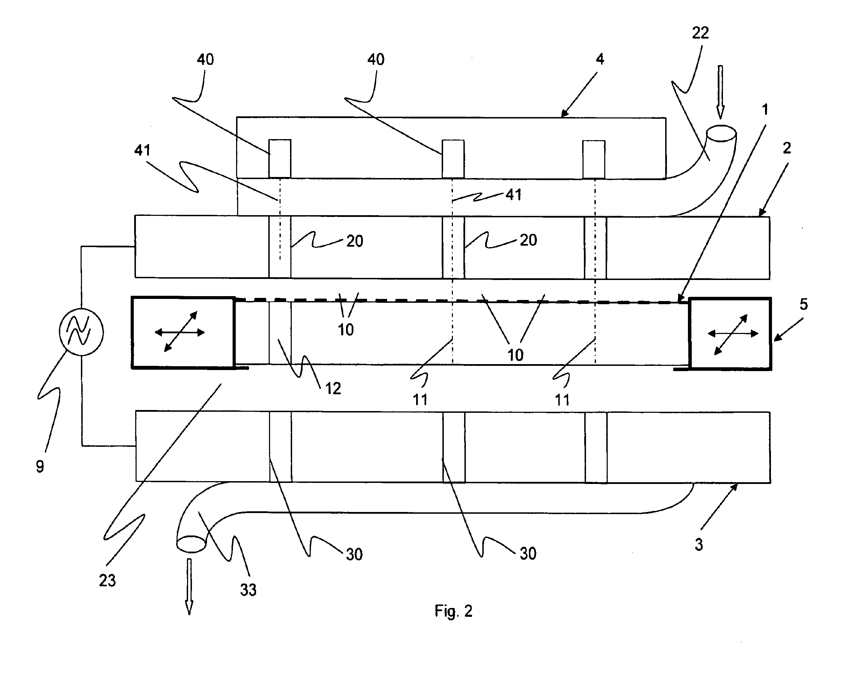

Fig. 2 zeigt eine weitere Apparatur zur Erzeugung einer Vielzahl von Löchern 12 in Werkstücken 1. Das Werkstück 1 ist im Bearbeitungsraum 23 zwischen zwei plattenartigen Hochfrequenzelektroden 2, 3 angeordnet. Diese weisen zueinander fluchtende Lochungen 20, 30 auf, die ein Raster bilden. Im gleichen Raster ist eine Mehrzahl von Lasern 40 in einer Vielfachanordnung 4 angeordnet, so dass die abgegebenen Strahlen 41 zu den Lochungen 20 und 30 fluchten. Das Werkstück 1 sitzt in einem Werkstückhalter 5, der exakte koordinatenmäßige Verschiebungen ermöglicht. Auf diese Weise können die vorbestimmten Lochungsstellen 10 des Werkstückes 1 durch Verschiebung relativ zu der Vielfachanordnung 4 eingestellt werden. Die Plattenelektroden 2, 3 sind über einen Hochfrequenzgenerator 9 mit entsprechender Hochfrequenzspannung versorgbar. Über ein Leitungs- und Kanalsystem 22, 33 können reaktive Gase und Spülgase durch die Lochungen 20, 30 in den Bearbeitungsraum 23 zwischen den Elektroden 2, 3 geleitet werden, und es können Reaktionsprodukte und Spülgas sowie verdampftes Lochmaterial abgeführt werden.

Die Betriebsweise der Apparatur ist wie folgt:
Das Werkstück 1 wird in Stellung gebracht, so dass gewisse vorgesehene Lochungsstellen 10 zu den Lochungen 20, 30 fluchten. Danach werden die Laser 40 eingeschaltet und erzeugen athermische Zerstörungen entlang von filamentartigen Kanälen 11. Gleichzeitig wird Plasma an den Auftreffstellen der Strahlen 41 erzeugt. Dieses Plasma stellt gewissermaßen einen Leitungsspot dar, der als lokale Antenne für eingestrahlte Hochfrequenzenergie wirkt. Solche Hochfrequenzenergie wird durch Einschalten des Hochfrequenzgenerators 9 erzeugt, was zur Erhitzung des Materials 1 entlang der filamentartigen Kanäle 11 führt.

Die eingebrachte elektrische Energie führt außerdem entlang der Kanäle zu elektrischen Strömen, die mit steigender Temperatur stärker werden und schließlich zur Verdampfung von Lochmaterial führen.
Die Lochbildung kann durch Zufuhr von reaktivem Gas verstärkt und modifiziert werden. Solch reaktives Gas wird über die Zuleitung 22 und die Lochungen 20 den erhitzten Stellen zugeführt.
Reaktionsprodukte werden über die Lochungen 30 und den Kanal 33 abgeführt. Spülgase sorgen für die Reinigung des Werkstücks 1.

Wenn das vorgesehene Lochmuster 10 dichter ist, als es dem Raster der Laserstrahlen 41 entspricht, wird das Material 1 verschoben, und der beschriebene Vorgang wird wiederholt. Dies geschieht so lange, bis alle vorgesehenen Lochungsstellen 10 bearbeitet sind. Es können schlanke Löcher mit einem großen Verhältnis der Lochlänge zum Lochdurchmesser, dem sogenannten Aspekt, erzeugt werden. Es treten keine scharfen Kanten an den Locheingängen und -ausgängen auf.

Die beschriebene Apparatur kann abgewandelt werden. So ist es möglich, die filamentartigen Kanäle 11 in einer gesonderten Apparatur herzustellen und nachfolgend in einer anderen Apparatur die Löcher 12 zu erzeugen. Auch ist es möglich, das Platten- oder Substratmaterial 1 hinsichtlich der vorgesehenen Lochungsstellen 10 vorzubereiten. An den vorgesehenen Lochungsstellen kann das Material 1 mit strahlungsabsorbierender Farbe bedruckt werden. Dies begünstigt die lokale Aufheizung des Materials 1, wodurch, von diesen Stellen ausgehend, die elektrothermische Aufheizung ausgeht, die zu den Löchern 12 führt. Für diese lokale Aufheizung kann man auch eine konventionelle Strahlungsquelle anstelle eines Lasers benutzen. Dies kommt vor allem dann in Betracht, wenn man eine getrennte Produktion der filamentartigen Kanäle 11 und der Löcher 12 in getrennten Apparaturen in Betracht zieht. Mit solchen konventionellen Strahlungsquellen, die preiswerter und wartungsfreundlicher als Laser sind, lassen sich zugleich große Bereiche des Materials 1 homogen ausleuchten. Es ist möglich, aus der emittierten Strahlung die Spektralbereiche herauszufiltern, in denen das zu perforierende Material 1 absorbiert. Oder es werden konventionelle Strahlungsquellen benutzt, die nur in schmalen Spektralbereichen emittieren, für die zu perforierenden Materialien 1 transparent sind. In diesen Fällen kann man den Druckfarben auch selektive Absorber beimischen. Im Übrigen braucht die Druckfarbe nicht getrocknet zu werden, da dies ohnehin durch die Bestrahlung geschieht. Auch keramische Farben (Glasfritte mit Absorbern und wenig organischem Binder) sind zur Markierung der Lochungsstellen 10 brauchbar.

Zur Markierung der zu perforierenden Stellen 10 ist auch der Auftrag von leitfähiger Paste brauchbar. Die Paste wirkt als Lokalelektrode, d. h. das elektrische Feld von den Elektroden 2, 3 koppelt besonders stark an diesen Lokalelektroden an und erzeugt in deren Umgebung ein besonders starkes elektrisches Feld, so dass die elektrothermische Aufheizung bevorzugt in diesem Bereich erfolgt. Auch hier muss die Paste nicht getrocknet werden. Die Paste kann metallische Partikel enthalten oder durch thermische und chemische Prozesse metallische Partikel ausscheiden.

Für Solarzellen, die mit SiN beschichtet sind, sind Pasten mit einem Gehalt von PbO oder BiO auf der Basis von Glasfritten besonders vorteilhaft anwendbar, weil aufgeheiztes PbO oder BiO mit der elektrisch isolierenden SiN-Schicht chemisch reagiert und diese auflöst. Ein Teil des verbleibenden Pb oder BiO wird zu leitendem, metallischem Pb oder Bi reduziert. Diese metallischen Partikel markieren die Lochungsstellen auf dem Werkstück, von denen aus die elektrothermische Bildung der Löcher oder Perforationen ausgeht.

Es versteht sich, dass man auch Farbe und Paste mit elektrisch leitenden Einschlüssen kombinieren kann.

Zur Markierung der Lochungsstellen kann die Farbe und/oder Paste über diverse Druckverfahren aufgebracht werden, z. B. mittels des Sieb- oder Tampondruckverfahrens, oder des Tintenstrahlverfahrens.

Das beschriebene Perforationsverfahren ist wegen der Herstellung von neuartigen Interposern entwickelt worden. Diese enthalten ein Basissubstrat aus Glas, dessen Alkaligehalt kleiner als 700 ppm beträgt. Solches Glas hat einen Wärmeausdehnungsfaktor, der dem des Siliziums von Chips nahekommt. Das neue Perforationsverfahren ermöglicht die Herstellung besonders feiner Löcher im Bereich von 20 µm bis 450 µm, bevorzugt im Bereich von 50 µm bis 120 µm.

## Patentansprüche

1. Verfahren zum gleichzeitigen Erzeugen einer Vielzahl von Löchern (12) in Werkstücken (1) in Form von dünnen Platten und Substraten aus Glas, glasähnlichen Materialien, Glaskeramik sowie aus Halbleitern, **gekennzeichnet durch** folgende Schritte:
a) Bereitstellen des zu lochenden Werkstückes (1), das in einem Wellenlängenbereich zwischen 3000 und 200 nm wenigstens teilweise transparent ist;
b) Ausrichten einer Vielfach-Laserstrahlanordnung (4) mit Abgabe von Laserstrahlen auf vorbestimmte oder vorbereitete Lochungsstellen (10) des Werkstückes (1) nach vorbestimmtem Raster;
c) Auslösen von fokussierten Laserimpulsen (41) in einem Wellenlängebereich zwischen 3000 und 200 nm auf das Werkstück (1) mit einer Strahlungsintensität, die zu lokaler, athermischer Zerstörung des Werkstückmaterials entlang jeweils eines filamentartigen Kanals (11) zwecks Vorarbeiten der Löcher (12) im Werkstück (1) führt;
d) Aufweiten der filamentartigen Kanäle (11) auf einen gewünschten Durchmesser und Bildung der Löcher (12) unter Anwendung von elektrischer Energie, um mit Erhitzen und Schmelzen/Verdampfen von Material entlang der filamentartigen Kanäle (11) zur Bildung der Löcher (12) im Werkstück (1) zu führen.

2. Verfahren nach Anspruch 1,
wobei zwischen Elektroden (6, 7) in Schritt d) ein Hochspannungsfeld an den jeweiligen vorbestimmten Lochungsstellen (10) erzeugt wird, um dort jeweilige dielektrische Durchbrüche zu erzeugen, die zu Löchern (12) gewünschter Größe und Ausbildung führen.

3. Verfahren nach Anspruch 1,
wobei, ausgehend von der Oberfläche des Werkstückes (1), an den vorbestimmten oder an den vorbereiteten Lochungsstellen (10) örtlich eng begrenzte Leitungsbereiche erzeugt werden, und
wobei in Schritt d) zwischen Elektrodenplatten (2, 3) Hochfrequenzspannung erzeugt und die örtlich eng begrenzten, erzeugten Leitungsbereiche als Mikroantennen für die zugeführte Hochfrequenzenergie benutzt werden, was zu elektrothermischen Durchbrüchen und zur Bildung von Löchern (12) führt.

4. Verfahren nach Anspruch 3,
wobei die Leitungsbereiche durch örtliche Ionisation und Bildung von Plasma infolge Laserstrahlung erzeugt werden.

5. Verfahren nach Anspruch 3,
wobei die vorbereiteten Lochungsstellen (10) durch örtlich aufgedrucktes Material gebildet werden, das leitfähig ist oder durch Energieeintrag leitfähig wird, um die örtlich eng begrenzten Leitungsbereiche zu bilden.

6. Verfahren nach Anspruch 3,
wobei die örtlich eng begrenzten Leitungsbereiche durch aufgetragene Pasten mit einem Gehalt von PbO oder BiO auf einer SiN-Schicht erzeugt werden, die bei Bestrahlung mit fokussierten Laserimpulsen miteinander reagieren und die SiN-Schicht auflösen, wobei metallisches Pb oder Bi an den Lochungsstellen des Werkstücks erzeugt wird.

7. Verfahren nach Anspruch 3,
wobei die vorbereiteten Lochungsstellen (10) durch Farbe gebildet werden, die Strahlung absorbiert und dadurch als örtlich eng begrenzte Leitungsbereiche wirksam werden.

8. Verfahren nach Anspruch 3,
wobei die Leitungsbereiche durch eingebrachte Absorber oder Streuzentren im Werkstück (1) gebildet werden.

9. Verfahren nach einem der Ansprüche 1 bis 8,
wobei Strahlung eines Festkörperlasers mit einer Impulsdauer im ps- bis ns-Bereich verwendet wird, um filamentartige Kanäle (11) zu erzeugen.

10. Verfahren nach Anspruch 4,
wobei KrF-Laser mit einer Wellenlänge bei 250 *µ*m oder KrBr-Laser bei 209 *µ*m verwendet werden, um ein Plasma zu erzeugen.

11. Verfahren nach Anspruch 1,
wobei in Schritt d) Laser im nahen Infrarotbereich oder im optischen Strahlungsbereich zur homogenen Tiefenaufheizung des zu lochenden Werkstückes (1) angewendet werden.

12. Verfahren nach Anspruch 11,
wobei das zu lochende Werkstück (1) Licht absorbierende Substanz aufweist.

13. Verfahren nach einem der Ansprüche 1 bis 11, wobei im Schritt d) reaktive Gase zur Förderung der Lochbildung (12) angewendet werden.

14. Vorrichtung zur Erzeugung von Muster mit einer Vielzahl von Löchern (12) in Werkstücken (1) und zur Durchführung des Verfahrens nach einem der Ansprüche 1 bis 13, umfassend: - einen Werkstückhalter (5) zum genauen Positionieren des Werkstückes (1) innerhalb des Bearbeitungsraumes (23), und **gekennzeichnet durch**:
- einen plattenförmigen Elektrodenhalter (26) und einen plattenförmigen Gegenelektrodenhalter (37), die einen Bearbeitungsraum (23) zur Aufnahme des Werkstückes (1) einschließen;
- eine Vielfachanordnung (4) von Lasern (40) zur Abgabe von jeweiligen Laserstrahlen (41) gemäß einem vorbestimmten Raster, das dem Muster von vorbestimmten Lochungsstellen (10) des Werkstückes (1) angepasst ist, wobei jedem Laserstrahl jeweils eine Lochung (20) im Elektrodenhalter (26) und eine Lochungsstelle (10) im Werkstück (1) zugeordnet sind;
- wenigstens der Elektrodenhalter (26) weist Lochungen (20) mit dem vorbestimmten Raster auf, das den vorbestimmten Lochungsstellen (10) des Werkstückes (1) angepasst ist;
- Elektrodenhalter (26) und Gegenelektrodenhalter (37) weisen Elektroden (6) bzw. Gegenelektroden (7) auf;
- die Laser (40) sind zu bestimmten Zeitpunkten zur Abgabe der Laserstrahlen (41) einschaltbar;
- wobei die Laser (40) Strahlung (41) in einem Wellenlängenbericht zwischen 3000 und 200 nm mit solcher Strahlungsintensität abgeben können, dass das zu lochende Werkstück (1) entlang von filamentartigen Kanälen (11) athermische Schädigungen erfährt;
- die Elektroden (6) und Gegenelektroden (7) sind zu späteren Zeitpunkten zur Abgabe von Hochspannungsüberschlägen einschaltbar, um die Löcher (12) in dem Werkstück (1) zu erzeugen.

15. Vorrichtung nach Anspruch 14,
wobei symmetrisch um die Lochungen (2) des Elektrodenhalters (26) herum jeweils mehrere einzelne Elektroden (6) angeordnet sind, denen entsprechend zugeordnete einzelne Gegenelektroden (7) gegenüberstehen, und wobei die einzelnen symmetrisch um jede Lochung (20) angeordneten Elektroden (6) umlaufend und in einem abwechselnden Muster zu den einzelnen Gegenelektroden (7) mit Hochspannung beanschlagbar sind.

16. Vorrichtung nach Anspruch 14 oder 15,
wobei ein Kanalsystem (22, 23) zur Bearbeitungskammer (23) führt, durch welches reaktive Gase und Spülgase zu- und abgeführt werden können, um die Lochbildung (12) zu fördern und Reaktionsprodukte wegzuschaffen.

17. Vorrichtung zur Erzeugung von Muster mit einer Vielzahl von Löchern (12) in Werkstücken (1) und zur Durchführung des Verfahrens nach einem der Ansprüche 1 bis 13, umfassend:
- einen Werkstückhalter (5) zum genauen Positionieren des Werkstückes (1) innerhalb des Bearbeitungsraumes (23), und **gekennzeichnet durch**:
- eine plattenförmige Hochfrequenzelektrode (2) und eine plattenförmige Hochfrequerizgegenelektrode (3), die einen Bearbeitungsraum (23) zur Aufnahme des Werkstückes (1) einschließen;
- eine Vielfachanordnung (4) von Lasern (40) zur Abgabe von jeweiligen Laserstrahlen (41) gemäß einem vorbestimmten Raster, das dem Muster von vorbestimmten Lochungsstellen (10) des Werkstückes (1) angepasst ist, wobei jedem Laserstrahl jeweils eine Lochung (20) im Elektrodenhalter (26) und eine Lochungsstelle (10) im Werkstück (1) zugeordnet sind;
- wenigstens die Hochfrequenzelektrode (2) weist Lochungen (20) mit dem vorbestimmten Raster auf, das dem Muster der vorbestimmten Lochungsstellen (10) des Werkstücks (1) angepasst ist;
- wobei die Laser (40) Strahlung (41) in einem Wellenlängenbereich zwischen 3000 und 200 nm mit solcher Strahlungsintensität abgeben können, dass das zu lochende Werkstück (1) entlang von filamentartigen Kanälen (11) athermische Schädigungen erfährt;
- die Laser (40) sind zu bestimmten Zeitpunkten zur Abgabe von Laserstrahlen (41) einschaltbar, um an den dem Raster entsprechenden Lochungsstellen (10) zur Bildung von eng begrenzten, lokalen Leitungsbereichen zu sorgen;
- dem Elektroden-Gegenelektroden-Paar (2, 3) ist Hochfrequenzenergie zuführbar, um solche Hochfrequenzenergie in das Raster der Leitungsbereiche einzukoppeln und **dadurch** Löcher (12) an vorgesehenen Stellen (10) im Werkstück (1) zu erzeugen.

18. Vorrichtung nach Anspruch 17,
wobei beide plattenförmige Hochfrequenzelektroden (2, 3) mit Lochungen (20, 30) versehen sind, die zueinander fluchten und mit Zu- und Ableitungskanälen (22, 33) für Gase zu Zwecken der Entfernung von erodiertem Lochmaterial verbunden sind.

19. Vorrichtung nach einem der Ansprüche 14 bis 18,
wobei der Werkstückhalter (5) das Werkstück (1) koordinatenmäßig in sehr feinen Schritten zu verstellen vermag, um das Werkstück (1) in unterschiedlichen gewünschten Stellungen relativ zu der Vielfachanordnung (4) von Lasern (40) gemäß den vorbestimmten Lochungsstellen (10) zu positionieren.

20. Glas-Interposer, und
mit Löchern, die gemäß dem Verfahren nach einem der Ansprüche 1 bis 13 hergestellt sind sowie Lochgrößen im Bereich von 20 *µ*m bis 450 *µ*m aufweisen, **gekennzeichnet durch** ein Basissubstrat aus Glas, dessen Alkaligehalt kleiner als 700 ppm ist.

## Claims

1. A method for simultaneously generating a plurality of holes (12) in workpieces (1) in form of thin plates and substrates of glass, glass-like materials, glass ceramics and semiconductors, **characterized by** the steps of:
a) providing the workpiece (1) to be perforated which is at least partially transparent in a range of wavelengths between 3000 and 200 nm;
b) aligning a multi laser beam array (4) emitting laser beams with predetermined or prepared perforation points (10) of the workpiece (1) according to a predetermined pitch;
c) triggering focused laser pulses (41) in a range of wavelengths between 3000 and 200 nm towards the workpiece (1), with a radiation intensity that causes local non-thermal destruction of the workpiece material along a respective filamentary channel (11) for preparing the holes (12) in the workpiece (1);
d) expanding the filamentary channels (11) to a desired diameter and forming the holes (12) by applying electrical energy so as to form the holes (12) in the workpiece (1) by heating and melting/evaporating of material along the filamentary channels (11).

2. The method according to claim 1,
wherein in step d) a high voltage field is generated at the respective predetermined perforation points (10) between electrodes (6, 7) in order to produce a respective dielectric breakdown there, which results in holes (12) of a desired size and shape.

3. The method according to claim 1,
wherein starting from the surface of the workpiece (1), locally narrowly limited conductive areas are generated at the predetermined or prepared perforation points (10); and
wherein in step d) a high-frequency voltage is generated between electrode plates (2, 3), and the locally narrowly limited conductive areas generated are used as micro-antennas for the high-frequency energy supplied, resulting in electro-thermal breakdown and in formation of holes (12).

4. The method according to claim 3,
wherein the conductive areas are generated by local ionization and formation of a plasma caused by laser radiation.

5. The method according to claim 3,
wherein the prepared perforation points (10) are defined by locally imprinted material which is conductive or becomes conductive through energy input, in order to form the locally narrowly limited conductive areas.

6. The method according to claim 3,
wherein the locally narrowly limited conductive areas are produced by pastes having a content of PbO or BiO and being applied on an SiN layer, which react with each other when irradiated with focused laser pulses to dissolve the SiN layer thereby generating metallic Pb or Bi at the perforation points of the workpiece.

7. The method according to claim 3,
wherein the prepared perforation points (10) are defined by paint which absorbs radiation so as to become effective as locally narrowly limited conductive areas.

8. The method according to claim 3,
wherein the conductive areas are defined by absorbers or scattering centers introduced into the workpiece (1).

9. The method according to any of claims 1 to 8,
wherein radiation of a solid-state laser with a pulse duration in a range from ps to ns is used to produce filamentary channels (11).

10. The method according to claim 4,
wherein KrF lasers having a wavelength at 250 *µ*m or KrBr lasers at 209 *µ*m are used to generate a plasma.

11. The method according to claim 1,
wherein in step d) lasers in the near infrared range or in the visual radiation range are used for homogeneous deep heating of the workpiece (1) to be perforated.

12. The method according to claim 11,
wherein the workpiece (1) to be perforated comprises light-absorbing substance.

13. The method according to any of claims 1 to 11,
wherein in step d) reactive gases are employed to promote the formation of holes (12).

14. An device for producing patterns of a plurality of holes (12) in workpieces (1) and for performing the method according to any of claims 1 to 13, comprising:
- a workpiece holder (5) for accurately positioning the workpiece (1) within a processing space (23); and **characterized by**:
- a plate-shaped electrode holder (26) and a plate-shaped counter electrode holder (37) enclosing the processing space (23) for receiving the workpiece (1);
- a multi-array (4) of lasers (40) for emitting respective laser beams (41) according to a predetermined pitch that is matched with the pattern of predetermined perforation points (10) of the workpiece (1), wherein each laser beam has associated therewith a respective hole (20) in the electrode holder (26) and a perforation point (10) in the workpiece (1);
- at least the electrode holder (26) has holes (20) with the predetermined pitch matched with the predetermined perforation points (10) of the workpiece (1);
- electrode holder (26) and counter electrode holder (37) comprise electrodes (6) and counter electrodes (7), respectively;
- the lasers (40) can be enabled at specific times to emit the laser beams (41);
- the lasers (40) are capable of emitting radiation (41) in a range of wavelengths between 3000 and 200 nm with such a radiation intensity that the workpiece (1) to be perforated undergoes non-thermal damage along filamentary channels (11);
- the electrodes (6) and counter electrodes (7) can be enabled at later points in time for delivering highvoltage flashovers in order to produce the holes (12) in the workpiece (1).

15. The device of claim 14,
wherein a plurality of individual electrodes (6) are arranged symmetrically around each of the perforations (2) of the electrode holder (26) opposite to correspondingly associated individual counter electrodes (7), and wherein a high voltage can be applied to the individual electrodes (6) symmetrically arranged around each hole (20) in rotary manner and in an alternating pattern with respect to the individual counter electrodes (7).

16. The device according to claim 14 or 15,
wherein a channel system (22, 23) leads to the processing chamber (23), through which reactive gases and purge gases can be supplied and discharged in order to promote the formation of holes (12) and to remove reaction products.

17. A device for producing patterns of a plurality of holes (12) in workpieces (1) and for performing the method according to any of claims 1 to 13, comprising:
- a workpiece holder (5) for accurately positioning the workpiece (1) within a processing space (23); and **characterized by**:
- a plate-shaped high-frequency electrode (2) and a plate-shaped high-frequency counter electrode (3) enclosing the processing space (23) for receiving the workpiece (1);
- a multi-array (4) of lasers (40) for emitting respective laser beams (41) according to a predetermined pitch that is matched with the pattern of predetermined perforation points (10) of the workpiece (1), wherein each laser beam has associated therewith a respective hole (20) in the high-frequency electrode (2) and a perforation point (10) in the workpiece (1);
- at least the high-frequency electrode (2) has holes (20) with the predetermined pitch matched with the predetermined perforation points (10) of the workpiece (1) ;
- wherein the lasers (40) are capable of emitting radiation (41) in a range of wavelengths between 3000 and 200 nm with such a radiation intensity that the workpiece (1) to be perforated undergoes non-thermal damage along filamentary channels (11);
- the lasers (40) can be enabled at specific times to emit laser beams (41) in order to cause formation of narrowly limited local conductive areas at the perforation points (10) corresponding to the pitch;
- the electrode/counter electrode pair (2, 3) can be supplied with high-frequency energy to inject such high-frequency energy into the pitch of conductive areas and thereby to produce holes (12) at predetermined points (10) in the workpiece (1).

18. The device of claim 17,
wherein each of the plate-shaped high-frequency electrodes (2, 3) has holes (20, 30) which are aligned with each other and are connected with inlet and outlet channels (22, 33) for gases for the purpose of removing eroded perforation material.

19. The device according to any of claims 14 to 18,
wherein the workpiece holder (5) is capable of adjusting the workpiece (1) in terms of coordinates in very fine steps for positioning the workpiece (1) in different desired positions with respect to the multi-array (4) of lasers (40) in accordance with the predetermined perforation points (10).

20. A glass interposer, with holes that have been produced by the method according to any of claims 1 to 13, and with hole sizes in a range from 20 *µ*m to 450 *µ*m; **characterized by** a base substrate made of glass having an alkali content of less than 700 ppm.

## Revendications

1. Procédé de génération simultanée d'une pluralité de trous (12) dans des pièces (1) présentant la forme de plaques fines et de substrats en verre, en matériaux similaires au verre, en vitro-céramique et en semiconducteurs, **caractérisé par** les étapes suivantes :
a) préparation de la pièce (1) à perforer, laquelle est au moins partiellement transparente dans une plage de longueurs d'onde entre 3000 et 200 nm ;
b) orientation d'un dispositif à faisceaux laser multiples (4) émettant des faisceaux laser vers des emplacements de perforation (10) prédéfinis ou préparés de la pièce (1) suivant une trame définie ;
c) déclenchement d'impulsions laser (41) focalisées vers la pièce (1) dans une plage de longueurs d'onde entre 3000 et 200 nm, avec une intensité de rayonnement provoquant une destruction athermique locale du matériau de pièce (1) le long d'un canal (11) en forme de filament en vue d'un ébauchage des trous (12) dans la pièce (1) ;
d) élargissement des canaux (11) en forme de filaments à un diamètre souhaité et formation des trous (12) en recourant à l'énergie électrique, pour entraîner la formation des trous (12) dans la pièce (1) par chauffage et fusion/vaporisation de matériau le long des canaux (11) en forme de filaments.

2. Procédé selon la revendication 1,
où en étape d), un champ de haute tension est généré entre électrodes (6, 7) aux emplacements de perforation (10) prédéfinis, pour y réaliser des traversées diélectriques produisant des trous (12) de grandeur et de conformation souhaitées.

3. Procédé selon la revendication 1,
où, à partir de la surface de la pièce (1), des zones de conduction localement étroitement délimitées sont générées aux emplacements de perforation (10) prédéfinis ou préparés, et
où, en étape d), une tension à haute fréquence est générée entre des plaques d'électrode (2, 3), et les zones de conduction localement étroitement délimitées générées sont utilisées comme micro-antennes pour l'énergie à haute fréquence conduite, ce qui produit des traversées électrothermiques et entraîne la formation de trous (12).

4. Procédé selon la revendication 3,
où les zones de conduction sont générées par ionisation locale et par formation de plasma due au rayonnement laser.

5. Procédé selon la revendication 3,
où les emplacements de perforation (10) préparés sont formés par compression locale de matériau, conducteur ou devenant conducteur par application d'énergie, afin de former les zones de conduction localement étroitement délimitées.

6. Procédé selon la revendication 3,
où les zones de conduction localement étroitement délimitées sont générées par application de pâtes à teneur en PbO ou en BiO sur une couche SiN, lesquelles réagissent entre elles à l'irradiation par des impulsions laser focalisées et dissolvent la couche SiN, un Pb ou Bi métallique étant généré aux emplacements de perforation de la pièce.

7. Procédé selon la revendication 3,
où les emplacements de perforation (10) préparés sont formés par couleur, le rayonnement est absorbé et où ils deviennent ainsi actifs comme zones de conduction localement étroitement délimitées.

8. Procédé selon la revendication 3,
où les zones de conduction sont formées par incorporation d'absorbeurs ou de centres de diffusion dans la pièce (1).

9. Procédé selon l'une des revendications 1 à 8,
où il est recouru au rayonnement d'un laser solide avec une durée d'impulsion en régime ps à ns, afin de générer des canaux (11) en forme de filaments.

10. Procédé selon la revendication 4,
où un laser à KrF ayant une longueur d'onde de 250 µm ou un laser à KrBr à longueur d'onde de 209 µm sont utilisés pour générer un plasma.

11. Procédé selon la revendication 1,
où en étape d), des lasers sont utilisés dans la plage infrarouge proche ou dans la plage de rayonnement optique pour un chauffage homogène en profondeur de la pièce (1) à perforer.

12. Procédé selon la revendication 11,
où la pièce (1) à perforer comprend une substance absorbant la lumière.

13. Procédé selon l'une des revendications 1 à 11,
où, en étape d), des gaz réactifs sont utilisés pour assister la formation de trous (12).

14. Dispositif pour la génération de motifs avec une pluralité de trous (12) dans des pièces (1) et pour l'exécution du procédé selon l'une des revendications 1 à 13, comprenant :
- un porte-pièce (5) pour un positionnement précis de la pièce (1) à l'intérieur de l'espace d'usinage (23), et **caractérisé par** :
- un support d'électrode (26) en forme de plaque et un support de contre-électrode (37) en forme de plaque, lesquels délimitent un espace d'usinage (23) pour la réception de la pièce (1) ;
- un dispositif (4) à lasers (40) multiples pour l'émission de faisceaux laser (41) suivant une trame prédéfinie, ajustée au motif des emplacements de perforation (10) prédéfinis de la pièce (1), une perforation (20) dans le support d'électrode (26) et un emplacement de perforation (10) dans la pièce (1) étant respectivement associés à chaque faisceau laser ;
- au moins le support d'électrode (26) présentant des perforations (20) suivant la trame prédéfinie ajustée aux emplacements de perforation (10) prédéfinis de la pièce (1) ;
- le support d'électrode (26) et le support de contre-électrode (37) présentant des électrodes (6) ou des contre-électrodes (7) ;
- les lasers (40) étant activables à des moments déterminés pour l'émission des faisceaux laser (41) ;
- les lasers (40) pouvant émettre un rayonnement (41) dans une plage de longueurs d'onde entre 3000 et 200 nm avec une intensité telle que la pièce (1) à perforer subit des dommages athermiques le long de canaux (11) en forme de filaments ;
- les électrodes (6) et les contre-électrodes (7) étant activables à des moments ultérieurs pour l'émission de décharges à haute tension afin de générer les trous (12) dans la pièce (1).

15. Dispositif selon la revendication 14,
où plusieurs électrodes (6) individuelles sont disposées symétriquement tout autour des perforations (2) du support d'électrode (26), auxquelles sont opposées des contre-électrodes (7) individuelles correspondantes, et où une haute tension peut être appliquée aux électrodes (6) individuelles disposées symétriquement autour de chaque perforation (20), périphériquement et suivant un motif alterné par rapport aux contre-électrodes (7) individuelles.

16. Dispositif selon la revendication 14 ou 15,
où un système de canal (22, 23) mène au compartiment d'usinage (23), au moyen duquel des gaz réactifs et des gaz de rinçage peuvent être amenés et évacués pour assister la formation de trous (12) et éliminer des produits de réaction.

17. Dispositif pour la génération de motifs avec une pluralité de trous (12) dans des pièces (1) et pour l'exécution du procédé selon l'une des revendications 1 à 13, comprenant :
- un porte-pièce (5) pour un positionnement précis de la pièce (1) à l'intérieur de l'espace d'usinage (23), et **caractérisé par** :
- une électrode à haute fréquence (2) en forme de plaque et une contre-électrode à haute fréquence (3) en forme de plaque, lesquelles délimitent un espace d'usinage (23) pour la réception de la pièce (1) ;
- un dispositif (4) à lasers (40) multiples pour l'émission de faisceaux laser (41) suivant une trame prédéfinie, ajustée au motif des emplacements de perforation (10) prédéfinis de la pièce (1), une perforation (20) dans le support d'électrode (26) et un emplacement de perforation (10) dans la pièce (1) étant respectivement associés à chaque faisceau laser ;
- au moins l'électrode à haute fréquence (2) présentant des perforations (20) suivant la trame prédéfinie ajustée aux emplacements de perforation (10) prédéfinis de la pièce (1) ;
- les lasers (40) pouvant émettre un rayonnement (41) dans une plage de longueurs d'onde entre 3000 et 200 nm avec une intensité telle que la pièce (1) à perforer subit des dommages athermiques le long de canaux (11) en forme de filaments ;
- les lasers (40) étant activables à des moments déterminés pour l'émission de faisceaux laser (41), afin d'assurer la formation de zones de conduction localement étroitement délimitées à des emplacements de perforation (10) correspondants à la trame ;
- de l'énergie à haute fréquence pouvant être conduite vers la paire électrode/contre-électrode (2, 3) pour coupler une telle énergie à haute fréquence à la trame des zones de conduction et générer ainsi des trous (12) à des emplacements (10) prévus dans la pièce (1).

18. Dispositif selon la revendication 17,
où les deux électrodes à haute fréquence (2, 3) en forme de plaque sont pourvues de perforations (20, 30) alignées entre elles et sont reliées à des canaux d'amenée et d'évacuation (22, 33) de gaz afin d'éliminer le matériau de trou érodé.

19. Dispositif selon l'une des revendications 14 à 18,
où le porte-pièce (5) peut déplacer la pièce (1) par étapes dans un système de coordonnées à définition très fine, pour mettre en place la pièce (1) dans différentes positions souhaitées par rapport au dispositif (4) à lasers multiples (40) suivant les emplacements de perforation (10) prédéfinis.

20. Interposeur en verre,
avec des trous réalisés au moyen du procédé selon l'une des revendications 1 à 13 et dont la grandeur est comprise entre 20 µm et 450 µm, **caractérisé par** un substrat de base en verre dont la teneur en alcali est inférieure à 700 ppm.
